(19) Europäisches Patentamt
European Patent Office
Office européen des brevets

(11) **EP 2 755 005 A2**

(12) **EUROPEAN PATENT APPLICATION**

(43) Date of publication:
16.07.2014 Bulletin 2014/29

(51) Int Cl.:
**G01L 9/00** (2006.01)          **G01L 9/12** (2006.01)
**G01L 27/00** (2006.01)

(21) Application number: 13187300.2

(22) Date of filing: 04.10.2013

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 09.01.2013 US 201313737189
11.01.2013 KR 20130003543

(71) Applicant: **Auto Industrial Co., Ltd.**
**Seoul (KR)**

(72) Inventors:
• **Park, Kyong M**
**WESTLAKE VILLAGE, CA 91361 (US)**
• **Lee, Kang-Yoon**
**SEOUL (KR)**

(74) Representative: **Groth & Co. KB**
**P.O. Box 6107**
**102 32 Stockholm (SE)**

(54) **Output specification calibrating apparatus for capacitive pressure sensor**

(57)     An output specification calibrating apparatus for a capacitive pressure sensor. The output specification calibrating apparatus enables adjustment of non-linearity, offset, and gain of the capacitive pressure sensor in a software manner at the time of shipment. Accordingly, it is feasible to easily adjust output specifications of the capacitive pressure sensor and to thereby meet various needs of customers.

## FIG. 3A

**Description**

**BACKGROUND**

**1. Field**

The following description relates to a pressure measurement technology, and more particularly, to an output specification calibrating apparatus for a capacitive pressure sensor.

**2. Description of the Related Art**

Pressure sensors convert mechanical deflection due to applied pressure into an electrical signal, and obtain the measurement of the pressure by measuring the output electrical signals. Korean Patent Publication No. 10-2001-0039983 (published on May 15, 2001) discloses a capacitive pressure sensor, which converts mechanical deflection into a capacitance, and measures a pressure by measuring the changes in capacitance.

Capacitance pressure sensors have non-linearity characteristics with respect to an applied pressure, and are temperature-sensitive. Thus, to meet various demands of customers for output specifications of the capacitance pressure sensor, the output specifications need to be adjusted according to the individual customers' needs at the time of shipment. Thus, research on an output specification calibrating apparatus for a capacitive pressure sensor has been conducted in an attempt to meet a variety of desired output specifications of the capacitive pressure sensor.

**Related Art Documents**

**Patent Documents**

Korean Patent Publication No. 10-2001-0039983

**SUMMARY**

The following description relates to an output specification calibrating apparatus for a capacitive pressure sensor, which enables calibration of output specifications of the capacitive pressure sensor at the time of shipment, in an effort to meet various needs of customers for the output specifications.

The following description also relates to an output specification calibrating apparatus for a capacitive pressure sensor, which enables easy calibration of output specifications of the capacitive pressure sensor in a software manner.

In one general aspect, there is provided an output specification calibrating apparatus for a capacitive pressure sensor, including: an output control circuit configured to convert capacitance changes of a capacitance $C_p$ formed by a primary electrode of the capacitive pressure sensor and a capacitance $C_r$ formed by a reference electrode of the capacitive pressure sensor into an output voltage and output the output voltage; an output specification calibration element configured to comprise at least one output specification offset calibration element, an output specification non-linearity adjustment element, an output specification gain adjustment element, and an output specification temperature compensation element, each element configured to adjust a specification of an output of the output control circuit; a setting unit configured to set electrical property values of the output specification offset calibration element, the output specification non-linearity adjustment element and the output specification gain adjustment element; an external input interface configured to be connected to an external terminal for setting the electrical property values of the output specification offset calibration element, the output specification non-linearity adjustment element and the output specification gain adjustment element; and a temperature compensation circuit configured to set electrical property values of the output specification temperature compensation element.

The output control circuit may be configured to include a switch unit configured to control charge and discharge operations of the capacitance $C_p$ formed by the primary electrode and the capacitance $C_r$ formed by the reference electrode, an integrator configured to receive currents discharged from the capacitance $C_p$ and the capacitance $C_r$, output the received currents as an output voltage and continue to integrate an error correction signal until an error reaches zero, a power input unit configured to supply a constant power to the capacitance $C_p$ and the capacitance $C_r$, and a feedback unit configured to amplify an output voltage from the integrator and feed the amplified output voltage back to the capacitance $C_p$, the capacitance $C_r$ and the power input unit.

The output specification offset calibration element may be configured to include two variable resistors $R_{Lin1}$ and $R_{Lin2}$ being connected in series between a power input $V_+$ and ground, branching off from a series connection contact point, and being connected to an input terminal of the power input unit to calibrate an input voltage offset.

The setting unit may be configured to set resistances of the two variable resistors $R_{Lin1}$ and $R_{Lin2}$ as electrical property values.

The output specification gain adjustment element may be configured to comprise a variable resistor ROF being connected to both an inversion input terminal of an amplifier and an output terminal of the amplifier, which amplifies the output voltage from the integrator, to adjust a gain of the amplifier.

The setting unit may be configured to set a resistance of the variable resistor ROF as an electrical property value.

The output specification temperature compensation element may be configured to include a variable resistor ROI being connected to an inversion input terminal of an amplifier and an output terminal of the integrator, to compensate for changes in an output voltage of the amplifier due to temperature change.

The temperature compensation circuit may be configured to set a resistance of the variable resistor ROI as an electrical property value.

The output specification non-linearity adjustment element may be configured to include a variable resistor $R_{LinF}$ being connected to both an output terminal of the feedback unit and an input terminal of the power input unit, and connecting a pair of the capacitance $C_p$ formed by the primary electrode of the capacitive pressure sensor and the capacitance $C_r$ formed by the reference electrode between the output terminal of the feedback unit and the variable resistor $R_{LinF}$ to improve non-linearity of the capacitive pressure sensor.

The setting unit may be configured to set a resistance of the variable resistor $R_{Linf}$ as an electrical property value.

Other features and aspects will be apparent from the following detailed description, the drawings, and the claims.

## BRIEF DESCRIPTION OF THE DRAWINGS

FIGS. 1 and 2 are diagrams illustrating examples of a capacitive pressure sensor.

FIG. 3A is a block diagram illustrating a configuration of an output specification calibrating apparatus for a capacitive pressure sensor according to an exemplary embodiment of the present invention.

FIG. 3B is a block diagram illustrating a configuration of an offset calibration element of the output specification calibrating apparatus shown in FIG. 3A.

FIG. 3C is a block diagram illustrating a configuration of an output specification non-linearity adjustment element of the output specification calibrating apparatus shown in FIG. 3A.

FIG. 4 is a switching timing diagram for control of the output control circuit of the output specification calibrating apparatus for the capacitive pressure sensor according to the exemplary embodiment of the present invention.

FIG. 5A is a graph showing output specifications with respect to a change in pressure before and after offset calibration of an output specification calibrating apparatus for a capacitive pressure sensor according to an exemplary embodiment of the present invention.

FIG. 5B illustrates graphs showing output specifications with respect to time before and after offset calibration of the output specification calibrating apparatus for a capacitive pressure sensor according to the exemplary embodiment of the present invention.

FIG. 6A is a block diagram illustrating a configuration of a temperature compensation circuit of an output specification calibrating apparatus for a capacitive pressure sensor according to an exemplary embodiment of the present invention.

FIG. 6B is a graph showing an output voltage before and after voltage compensation by the output control circuit according to temperature.

FIG. 6C is a graph showing output specifications with respect to temperature change before and after output compensation over temperature by use of the output specification calibrating apparatus for the capacitive pressure sensor.

Throughout the drawings and the detailed description, unless otherwise described, the same drawing reference numerals will be understood to refer to the same elements, features, and structures. The relative size and depiction of these elements may be exaggerated for clarity, illustration, and convenience.

## DETAILED DESCRIPTION

The following description is provided to assist the reader in gaining a comprehensive understanding of the methods, apparatuses, and/or systems described herein. Accordingly, various changes, modifications, and equivalents of the methods, apparatuses, and/or systems described herein will be suggested to those of ordinary skill in the art. Also, descriptions of well-known functions and constructions may be omitted for increased clarity and conciseness.

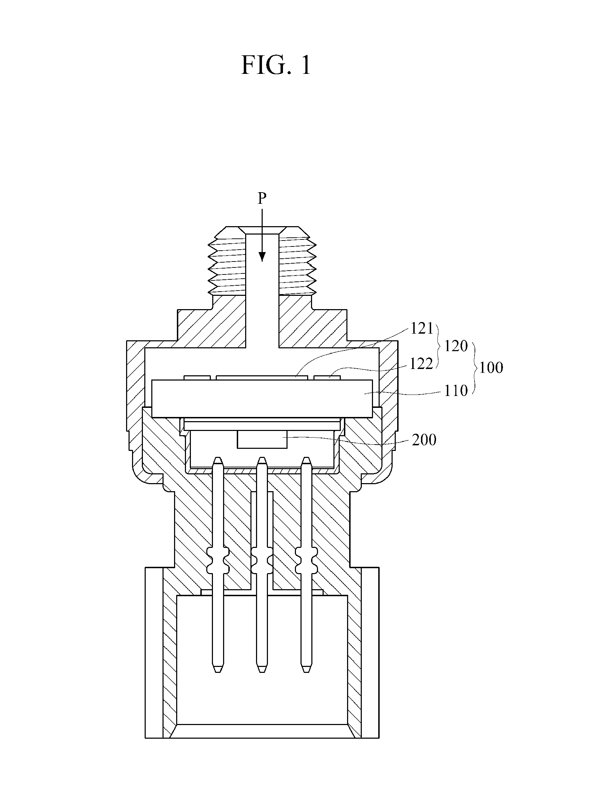

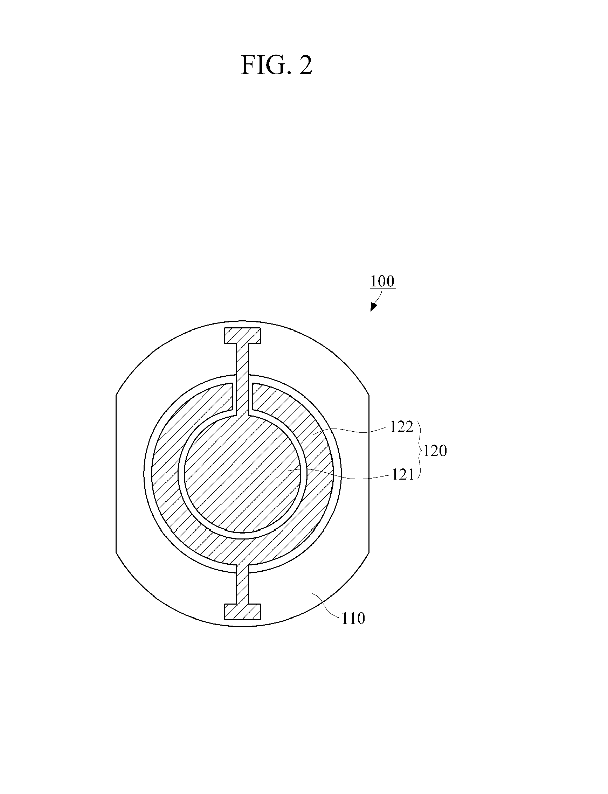

FIGS. 1 and 2 are diagrams illustrating examples of a capacitive pressure sensor. The capacitive pressure sensor 100 may include a dielectric substrate 110 and an electrode pattern 120 in order to output convert mechanical deflection into electrostatic capacitance.

The dielectric substrate 110 is where mechanical deflection occurs due to a pressure. The electrode pattern 120 formed on one surface of the dielectric substrate 110 includes a primary electrode 121 and a reference electrode 122, and is connected with an output specification calibrating apparatus via a lead unit (not illustrated).

The main electrode 121 and the reference electrode 122 may work with a conductive plate, which is coupled on the other surface of the dielectric substrate 110, to form capacitance $C_p$ and capacitance Cr, respectively.

In response to a mechanical deflection occurring due to a pressure exerted on the dielectric substrate 110, a gap between the primary electrode 121 and the reference electrode 122 on the dielectric substrate 110 changes, and each of the capacitances $C_p$ and $C_r$ also changes.

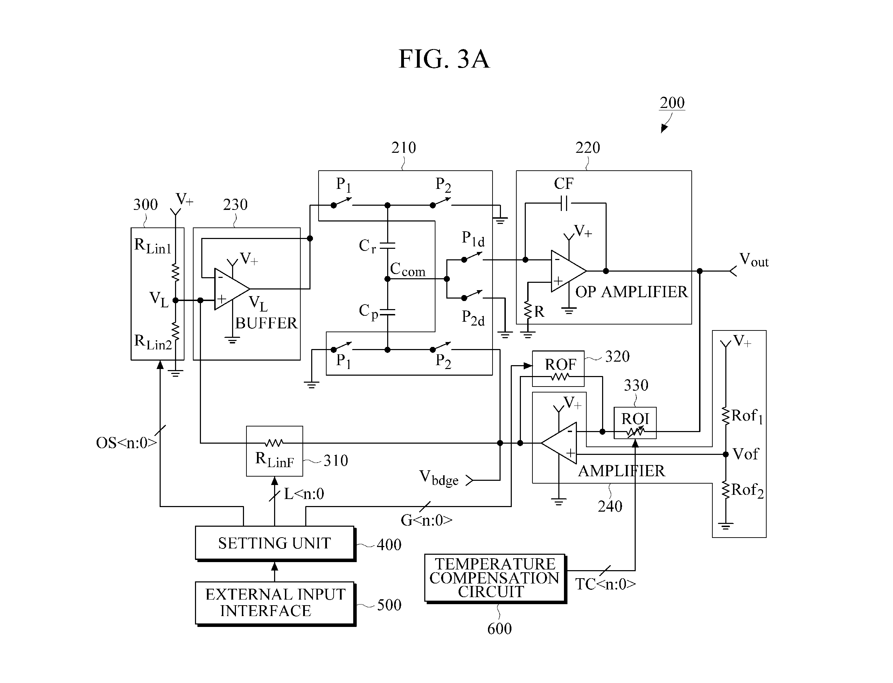

The output specification calibrating apparatus converts the capacitance changes of the capacitance $C_p$ and the capacitance $C_r$ into electrical signals, by which the pressure on the dielectric substrate 110 can be measured. FIG. 3A is a block diagram illustrating a configuration of an output specification calibrating apparatus for a capacitive pressure sensor according to an exemplary embodiment of the present invention.

As shown in FIG. 3A, the output specification calibrating apparatus includes an output control circuit 200, one or more output specification offset calibration element 300, an output specification non-linearity adjustment element 310, an output specification gain adjustment element 320, an output specification temperature compensation element 330, a setting unit 400, an external input interface 500, and a temperature compensation circuit 600.

The output control circuit 200 converts the capacitance changes of the capacitance $C_p$ formed by a primary electrode and the capacitance $C_r$ formed by a reference electrode into an output voltage and outputs it.

The output specification offset calibration element 330, the output specification non-linearity adjustment element 310, the output specification gain adjustment element 320, and the output specification temperature compensation element 330 calibrate output specifications of the output control circuit 200 according to preset electrical property values. For example, the output specification offset calibration element 300, the output specification non-linearity adjustment element 310, the output specification temperature compensation element 330 may be variable resistors for, respectively, offset calibration, non-linearity adjustment, gain adjustment and temperature compensation of the capacitive pressure sensor.

The setting unit 400 sets the electrical property values of the output specification calibration element 300, the output specification non-linearity adjustment element 310 and the output specification gain adjustment element 320. For example, the electrical property values set by the setting unit 400 may be resistances of the variable resistors for calibrating the offset, non-linearity and gain of the capacitive pressure sensor.

The external input interface 500 is connected with an external terminal (not shown) to set the electrical property values of the output specification calibration element 300, the output specification non-linearity adjustment element 310 and the output specification gain adjustment element 320. For example, the external input interface 500 may be a wired or wireless communication interface connected to an external device, such as a personal computer (PC) and a smartphone.

The temperature compensation circuit 600 sets the electrical property value of the output specification temperature compensation element 330 to compensate for a temperature change such that a constant output specification of the output control circuit 200 can be maintained despite the changes in temperature, wherein the output specification of the output control circuit 200 varies with the electrical property values of the output specification offset calibration element 300, the output specification non-linearity adjustment element 310 and the output specification gain adjustment element 320, which are set by the setting unit 400 and changed according to temperature.

The output of a capacitive pressure sensor has to be calibrated at the time of shipment so as to meet various needs of customers. To this end, the external terminal is connected to the external input interface 500 of the output specification calibrating apparatus for the capacitive pressure sensor, and software for calibrating the output specifications of the capacitive pressure sensor is executed for a user to manually input the electrical property values of the output specification offset calibration element 300, the output specification non-linearity adjustment element 310 and the output specification gain adjustment element 320.

Then, according to the electrical property values input by the user, the setting unit 400 sets the electrical property values of the output specification offset calibration element 300, the output specification non-linearity adjustment element 310 and the output specification gain adjustment element 320.

For example, in a case where the output specification calibration element 300, the output specification non-linearity adjustment element 310 and the output specification gain adjustment element 320 are variable resistors, the setting unit 400 may store set resistances of the variable resistors. Then, the setting unit 400 reads in the stored resistances each time booting up and selects an electrical contact point of the variable resistors that is suitable to the read resistance, thereby setting the electrical property values of the output specification offset calibration element 300, the output specification non-linearity adjustment element 310 and the output specification gain adjustment element 320.

In the meantime, the temperature compensation circuit 600 sets the electrical property value of the output specification temperature compensation element 330 to compensate for a temperature change such that a constant output specification of the output control circuit 200 can be maintained despite the changes in temperature, wherein the output specification of the output control circuit 200 varies with the electrical property values of the output specification offset calibration element 300, the output specification non-linearity adjustment element 310 and the output specification gain adjustment element 320, which are set by the setting unit 400 and changed according to temperature.

As a result, the output specifications of the output control circuit 200 are calibrated according to the electrical property values of the output specification offset calibration element 300, the output specification non-linearity adjustment element 310, the output specification gain adjustment element 320 and the output specification temperature compensation element 330. Accordingly, it is possible to calibrate the non-linearity, offset and gain of the capacitive pressure sensor, which may vary with temperature when shipment, and to thereby meet various needs of customers for output specifications. In addition, the exemplary embodiments of the present invention allow convenient calibration of output specifications of the capacitive pressure sensor in a software manner.

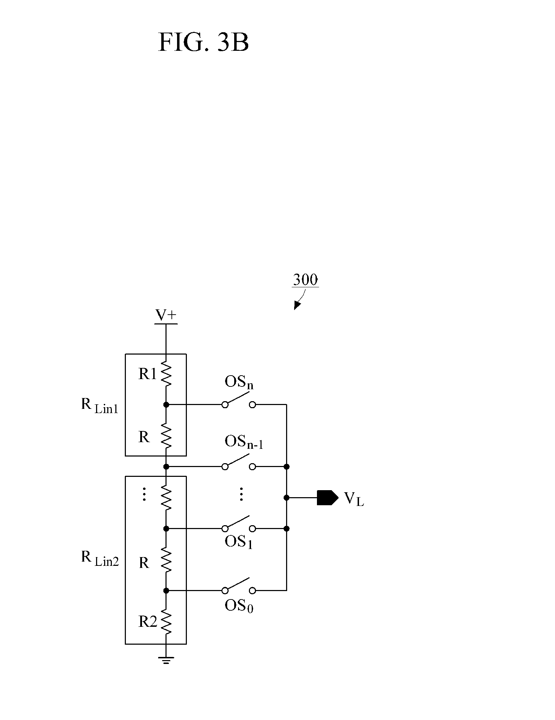

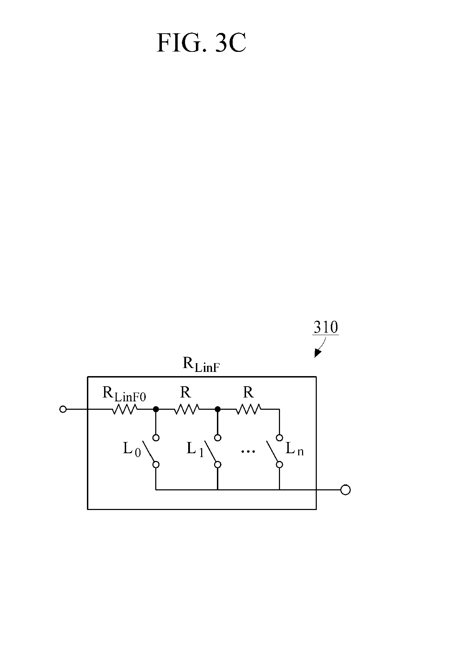

FIGS. 3B and 3C are circuit diagrams of the output specification offset calibration element and the output specification non-linearity adjustment element of FIG. 3A, each being implemented as a variable resistor, and the output specification gain adjustment element 320 and the output specification temperature compensation element 330 shown in FIG. 3A may also be implemented in the same manner as the output specification offset calibration element and the output specification non-linearity adjustment element.

Referring back to FIG. 3A, in detail, the output control circuit 200 includes a switch unit 210, an integrator 220, a power input unit 230, and a feedback unit 240.

The switch unit 210 controls charging and discharging of the capacitance $C_p$ formed by the primary electrode and the capacitance $C_r$ formed by the reference electrode. The switch unit 210 includes six switches (including two $P_1$ switches which simultaneously turn "on" at the beginning of Phase 1 and enter in OFF state in Phase 2, two $P_2$ switches which simultaneously turn "on" at the beginning of Phase 2 that does not overlap Phase 1 and remain in OFF state in Phase 1, one $P_{1d}$ switch which turns "on" after a predetermined period of time has elapsed since P1 switches turned "on" in Phase 1, and one $P_{2d}$ switch which turns "on" after a predetermined period of time has elapsed since $P_2$ switches turned "on" in Phase 2). In addition, the capacitance $C_p$ formed by the primary electrode and the capacitance $C_r$ formed by the reference electrode are connected to each other in series between $P_1$-$P_2$ switch pairs. A common terminal $C_{com}$ is formed at a branching point between the capacitance $C_p$ formed by the primary electrode and the capacitance $C_r$ formed by the reference electrode, and a terminal end of the common terminal $C_{com}$ is connected in parallel to the $P_{1d}$ switch and the $P_{2d}$ switch.

The $P_1$ switch of the $P_1$-$P_2$ switch pair to which the capacitance $C_r$ formed by the reference electrode is connected is connected to an output terminal of the power input unit 230, and the $P_2$ switch is connected to ground. The $P_1$ switch of the $P_1$-$P_2$ switch pair to which the capacitance $C_p$ formed by the primary electrode is connected is connected to ground and the $P_2$ switch is connected to an output terminal of the feedback unit 240. The $P_{1d}$ switch and the $P_{2d}$ switch, which are connected to the common terminal $C_{com}$ in parallel, are connected to an inversion input terminal of the integrator 220 and ground, respectively.

The integrator 220 receives currents discharged from the capacitance $C_p$ formed by the primary electrode and the capacitance $C_r$ formed by the reference electrode, and converts the currents into an output voltage $V_{out}$ and then outputs the voltage $V_{out}$. In addition, the integrator 220 continues to integrate an error correction signal in a control loop until the error reaches zero.

The integrator 220 includes an operational (OP) amplifier, an integration capacitor CF and a resistor R. A non-inversion input terminal of the operational amplifier is connected to ground via the resistor R for compensation of input bias current. An error in an integration result due to an input bias current may be reduced by equalizing a resistance between the two input terminals and ground.

The inversion input terminal of the OP amplifier is connected to the P1d switch and receives currents discharged from the capacitance $C_p$ and the capacitance $C_r$ through the common terminal $C_{com}$, wherein the capacitance $C_p$ is formed by the primary electrode of the capacitive pressure sensor and from the capacitance $C_r$ is formed by the reference electrode.

The integration capacitor CF is connected between the inversion terminal of the OP amplifier and the output terminal thereof. An integrating error of the integrator 220 is in inverse proportion to an open direct-current (DC) gain of the OP amplifier. The use of OP amplifier may ensure sufficient accuracy even if only an input offset voltage is compensated. The power input unit 230 supplies a constant power load to the capacitance $C_p$ and the capacitance $C_r$. For example, the power input unit 230 may be a buffer in use for maintaining a constant output voltage regardless of the changes in load.

The buffer supplies a constant power load to the capacitance $C_p$ formed by the primary electrode and the capacitance $C_r$ formed by the reference electrode.

In the meantime, two variable resistors $R_{Lin1}$ and $R_{Lin2}$ are used as output specification offset calibration elements 300 so as to calibrate an input voltage offset that is input to the power input unit 230. The two variable resistors $R_{Lin1}$ and $R_{Lin2}$ are connected in series between a power input $V_+$ and ground, branched off from a series connection contact point, and then connected to an input terminal of the power input unit 230. In addition, a non-inversion input terminal of the buffer is connected to the output terminal of the feedback unit 240. The buffer has an inversion terminal connected to its output terminal.

An input voltage to the buffer, which comes from the resistors $R_{Lin1}$ and $R_{Lin2}$ and the feedback unit 240, becomes $V_L$, and an output voltage of the buffer is maintained to $V_L$. The output voltage of the buffer is assigned to the capacitance $C_p$ formed by the primary electrode of the capacitive pressure sensor and the capacitance $C_r$ formed by the reference electrode by the switching operation of the switching unit 210, so that the capacitances $C_p$ and $C_r$ can be charged.

Referring to Equation 7 which will be described later, it is noted that the voltage $V_L$ input to the power input unit 230 may vary with resistances of the two variable resistors $R_{Lin1}$ and $R_{Lin2}$. Meanwhile, referring to Equations 1 and 4 which will be described later, it is noted that the output voltage from the integrator 220 is related to the voltage $V_L$.

Hence, an input voltage offset can be calibrated by setting, at the setting unit 400, the resistances of the two variable resistors $R_{Lin1}$ and $R_{Lin2}$, which are the output specification offset calibration elements 300, when the capacitance pressure sensor is shipped, and thereby an output voltage of the capacitive pressure sensor can be calibrated.

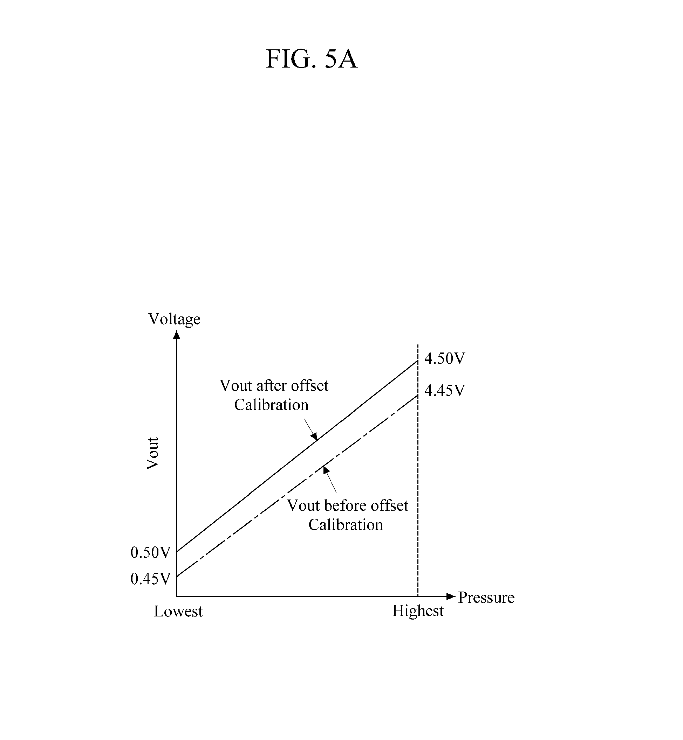

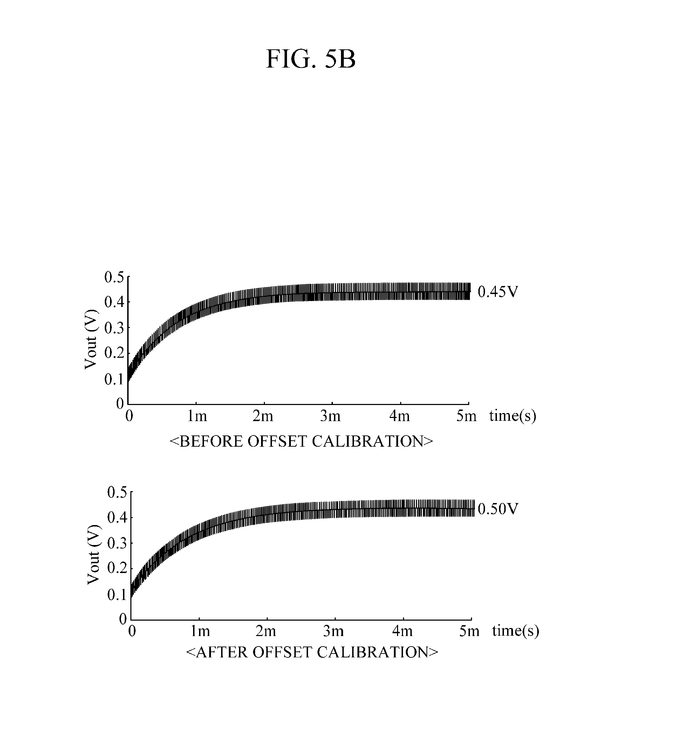

FIG. 5A is a graph showing output specifications with respect to a change in pressure before and after offset calibration of an output specification calibrating apparatus for a capacitive pressure sensor according to an exemplary embodiment of the present invention. FIG. 5B illustrates graphs showing results of a simulation for output specification with respect to time before and after offset calibration of the output specification calibrating apparatus for a capacitive pressure sensor according to the exemplary embodiment of the present invention.

As shown in FIG. 5B, in a simulation, which is designed such that an output specification becomes 0.5V at the lowest pressure, when an output voltage of the fabricated capacitive pressure sensor is 0.45V (before offset calibration) and does not conform to the desired output specification, a resistance of the output specification offset calibration element 300 is set by the setting unit 400 to calibrate the output specification to be 0.5 V as shown in FIG. 5A.

The feedback unit 240 amplifies the output voltage from the integrator 220 using an amplifier and feeds the amplified voltage back to the capacitance $C_p$ formed by the primary electrode of the capacitive pressure sensor, the capacitance $C_r$ formed by the reference electrode, and the power input unit 230.

The voltage that has been output from the integrator 220 and amplified by the amplifier is assigned to capacitance $C_p$ and the capacitance $C_r$ by the switching operation of the switch unit 210. The amplifier assigns the output voltage, which has been output from the integrator and fed back, to the input terminal of the power input unit 230.

A variable resistor ROF may be used as the output specification gain adjustment element 320 in order to calibrate a gain of the amplifier and a variable resistor ROI may be used as the output specification temperature compensation element 330 so as to calibrate the output specification according to temperature. An inversion input terminal of the amplifier is connected to an output terminal of the integrator 220 via the variable resistor ROI. Voltage formed between resistors Rof1 and Rof2 which are connected in series between a power input $V_+$ and ground is connected to a non-inversion input terminal of the amplifier.

The variable resistor ROF is connected between the inversion input terminal and the output terminal of the amplifier.

The gain indicates how much an output voltage is amplified compared to an input voltage, and referring to Equation 1 which will be described later, the gain (a ratio of input voltage $V_{out}$ to output voltage $V_{bdge}$) may be represented as a ratio (ROI/ROF) of resistance of the variable resistor ROI to resistance of the variable resistor ROF.

Accordingly, the gain may be calibrated by setting a resistance of the variable resistor ROF using the setting unit 400 before shipment of the capacitive pressure sensor, and thereby it is possible to calibrate the output voltage of the capacitive pressure sensor.

Meanwhile, the temperature compensation circuit 600 trims a resistance of the variable resistor ROI which is the output specification temperature compensation element 330, thereby compensating for the change in output voltage over temperature.

For non-linearity adjustment, the output specification non-linearity adjustment element 310 is connected between the output terminal of the feedback unit 240 and the input terminal of the power input unit 230. For example, a variable resistor $R_{LinF}$ that is interposed between the power input unit 230 and the feedback unit 240 and is connected to the capacitance $C_p$ formed by the primary electrode of the capacitive pressure sensor and the capacitance $C_r$ formed by the reference electrode may be used as the output specification non-linearity adjustment element 310.

When the capacitance $C_p$ formed by the primary electrode of the capacitive pressure sensor and the capacitance $C_r$ formed by the reference electrode are connected to the output control circuit 200 for pressure measurement, a value of $C_r/C_p$ with respect to pressure is non-linear. The non-linearity due to $C_r/C_p$ is related to the term "$(1 - C_r/C_p)/R_{LinF}$" in equation 8, which will be described later. By setting a resistance of the variable resistor $R_{LinF}$ using the setting unit 400 before shipment of the capacitive pressure sensor, it is possible to improve non-linearity of the capacitive pressure sensor.

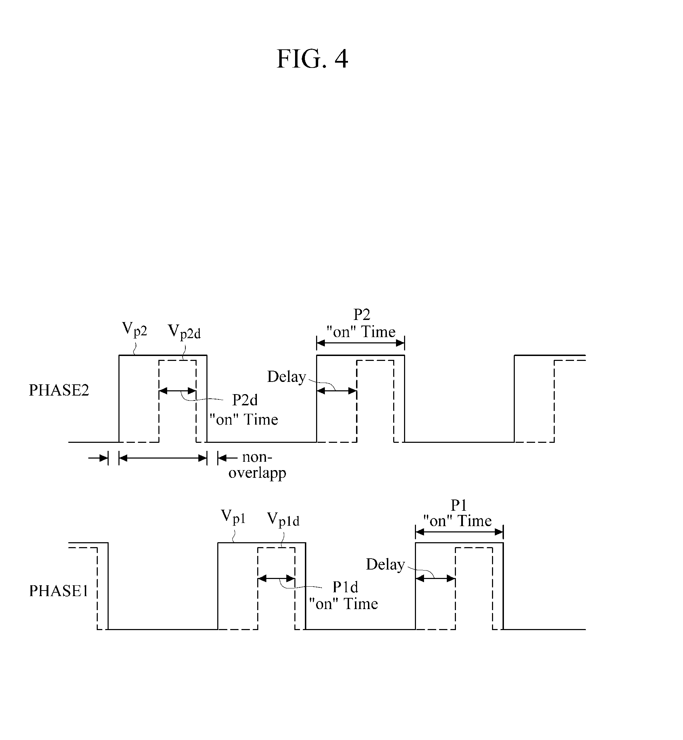

With reference to FIG. 4, operation of the output control circuit 200 of the capacitive pressure sensor shown in FIG. 3A will be described in detail. FIG. 4 is a switching timing diagram for control of the output control circuit of the capacitive pressure sensor.

As shown in FIG. 4, the six switches (including two $P_1$ switches, two $P_2$ switches, one $P_{1d}$ switch, and one $P_{2d}$ switch) turn "on" or "off" in Phase 1 and Phase 2 which do not overlap each other.

The two $P_1$ switches turn "on" at the beginning of Phase 1, and simultaneously enter in OFF state in Phase 2, and the $P_{1d}$ switch turns "on" after a predetermined period of time has elapsed since the $P_1$ switches turned "on".

The two $P_2$ switches simultaneously turn "on" at the beginning of Phase 2 and simultaneously enter in OFF state in Phase 1, and the $P_{2d}$ switch turns "on" after a predetermined period of time has elapsed since the $P_2$ switches turned "on".

Two non-overlapping phase control signals are output from an oscillator-driven gating circuit (not shown). In response to the two non-overlapping phase control signals, the six switches turn "on" or "off".

According to settings at the time of shipment, the amplifier of the feedback unit 240 provides three independent variable adjustments. The three independent variable adjustments are the linearity, offset, and gain.

The output voltage $V_{out}$ of the integrator 220 and the amplification voltage $V_{bdge}$ generated by the amplifier of the feedback unit 240 may be represented as Equation 1 below.

$$V_{out} = Vof + (RoI/RoF) \times (Vof - V_{bdge}) \qquad \ldots (1)$$

Where the power input is given as $V_+$, a voltage between the resistor Rof1 and the resistor Rof2 may be represented as Equation 2 below.

$$Vof = V_+ \times (Rof_2/(Rof_1 + (Rof_2)) \qquad \ldots (2)$$

In Phase 1, the $P_1$ switches and the $P_{1d}$ are turned "on" and the $P_2$ switches and the $P_{2d}$ switch are turned "off", and in Phase 2, the $P_2$ switches and the $P_{2d}$ switch are turned "on" and the $P_1$ switches and the $P_{1d}$ switch are turned "off".

Although the $P_{1d}$ switch and the $P_{2d}$ switch are turned "on", respectively, by Phase 1 or Phase 2, their ON-state is delayed with a predetermined time interval with respect to ON-time of the $P_1$ switches or the $P_2$ switches.

During Phase 2 in which the P2 switches and the P2d switch are turned "on", the capacitance $C_p$ formed by the primary electrode is charged to a voltage $V_{bdge}$, which is amplified by the amplifier 240, through the $P_2$ switch and the capacitance $C_r$ formed by the reference electrode is discharged to ground through the other $P_2$ switch.

The common terminal $C_{com}$ branches off between the capacitance $C_p$ formed by the primary electrode and the capacitance $C_r$ formed by the reference electrode is discharged to ground through the $P_{2d}$ switch. The capacitance $C_p$ formed by the primary electrode is charged with as much electric charge as $V_{bdge} \times C_p$. The capacitance $C_r$ formed by the reference electrode is not charged at ground potential, and immediately negative electric charges are accumulated in the common terminal $C_{com}$ to an amount of - $V_{bdge} \times C_p$.

Then, after the $P_{2d}$ switch turns "off", the $P_2$ switches turn "off". During a gap period between Phase 2 and Phase 1, charge transfer does not take place at the common terminal $C_{com}$.

Then, at the beginning of Phase 1, the capacitance $C_p$ (which has been charged with $V_{bdge}$ voltage in Phase 2) is discharged to ground via the $P_1$ switch, and the capacitance $C_r$ formed by the reference electrode is charged with $V_L$ voltage, which is a buffer output voltage of the power input unit 230, via the other P1 switch.

During Phase 1, the common terminal $C_{com}$ that branches off between the capacitance $C_p$ formed by the primary electrode and the capacitance $C_r$ formed by the reference electrode is connected to the inversion input terminal of the amplifier 220 via the $P_{1d}$ switch, and the non-inversion input terminal of the amplifier 220 is connected to ground via the resistor R.

During Phase 1, electric charges are accumulated in the capacitance $C_r$ formed by the reference electrode to an amount of $V_L \times C_r$. Upon the accumulation, negative electric charges are accumulated in the common terminal $C_{com}$ to an amount of - $V_L \times C_r$. When - $V_{bdge} \times C_p$ = - $V_L \times C_r$, the quantity of the negative electric charges of the common terminal $C_{com}$ becomes equal between the two phases and thus no charge is supplied/withdrawn to/from the integrator 220. Accordingly, the output voltage $V_{out}$ of the integrator 220 remains the same during two phases. In this condition, it is considered that the circuit is balanced.

The voltage $V_{bdge}$ that has been amplified and output by the amplifier of the feedback unit 240 may be obtained by a formula for the electric charges to be charged at the capacitance $C_p$ during Phase 1 and the electric charges to be charged at the capacitance $C_r$ during Phase 2.

$$V_{bdge} \times C_p = -V_L \times C_r \qquad\qquad …\;(3)$$

, which is also rearranged as follows:

$$V_{bdge} = V_L \times C_r/C_p \qquad\qquad …\;(4)$$

, where the term "$V_L \times C_r/C_p$" is an indication of the variation of the capacitance due to pressure exerted on the capacitive pressure sensor.

However, the above arrangement without modification has some drawbacks. There are undesired ripple at the output of the integrator 220, non-linear characteristic of a pair of the capacitance $C_p$ and the capacitance $C_r$ and a difficulty to use in single end power supply operation.

The integrator 220 does not only serve as an error integrator in a control loop, but also functions as an output amplifier. As a result, the integrator 220 is capable of input through the common terminal $C_{com}$ to operate at ground potential. In unbalanced state, $C_r \times V_L$ is not equating to $C_p \times V_{bdge}$. Charges in error are integrated by the integrator 220 until it is balanced through successive cycles.

When the capacitance $C_p$ formed by the primary electrode of the capacitive pressure sensor and the capacitance $C_r$ formed by the reference electrode is connected to the output control circuit 200 for pressure measurement, a mathematical value of $C_r/C_p$ versus pressure is non-linear. A rate of decrease $C_r/C_p$ with respect to increasing pressure is not a constant. Therefore, without linearity adjustment, in most cases, the output voltage verse pressure is unable to fit in a tolerance allowed for a viable pressure sensor product.

To correct such non-linearity, the variable resistor $R_{LinF}$ that is the output specification non-linearity adjustment element 310 for linearity adjustment is connected between the amplifier output terminal of the feedback unit 240 and the buffer input terminal of the power input unit 230. Using the variable resistors $R_{Lin1}$, $R_{Lin2}$, and $R_{LinF}$, and the voltage $V_{bdge}$ and the power input $V_+$ which are amplified and output from the amplifier of the feedback unit 240, a buffer output voltage $V_L$ of the power input unit 230 may be represented as an equation.

Conservation of current at a branch point between the variable resistor $R_{Lin1}$ and the variable resistor $R_{Lin2}$ is in accordance with the following relation. The sum of current flows from the amplifier of the feedback unit 240 to the buffer of the power input unit 230 and from the power input $V_+$ to the buffer of the power input unit 230 is equal to the amount of current flow from the branch point between the variable resistors RLin1 and RLin2 to ground.

$$(V_{bdge} - V_L)/R_{Linf} + (V_+ - V_L)/R_{Lin1} = V_L/R_{Lin2} \qquad\qquad …\;(5)$$

$$(V_L \times C_r/C_p - V_L)/R_{Linf} + (V_+ - V_L)/R_{Lin1} = V_L/R_{Lin2} \qquad\qquad …\;(6)$$

, which can be rearranged as follows:

$$V_L = (V_+/R_{Linf})/(1/R_{Lin1} + 1/R_{Lin2} + (1 - C_r/C_p)/R_{Linf}) \qquad …\;(7)$$

When the expression in the above equation is substituted into Equation 7,

$$V_{bdge} = ((V_+/R_{Linf}) \times C_r/C_p)/(1/R_{Lin1} + 1/R_{Lin2} + (1 - C_r/C_p)/R_{Linf}) … (8)$$

As the variable resistor $R_{LinF}$ is connected, an extra term "$(1 - C_r/C_p)/R_{Linf}$" is generated in the denominator of the Equation 8. This term adjusts the non-linearity in $C_r/C_p$.

Then, ripple reduction operation will be described. As shown in FIG. 4, there are two phases of switch-controlling waveforms.

Switching operations of the $P_1$ switch and the $P_2$ switch are non-overlapping, the $P_{1d}$ switch is delayed and turned "on" within $P_1$ switch ON-interval, and the $P_{2d}$ switch is delayed and turned "on" within $P_2$ switch ON-interval. At the beginning of the $P_2$ switch ON-interval during Phase 2, the current from the amplifier of the feedback unit 240 is charged to the capacitance $C_p$ formed by the primary electrode, and the current is discharged from the capacitance $C_r$ formed by the reference electrode to ground. $P_{2d}$ switch ON-state is delayed until the transient state (imbalanced state) has reached a steady state (balanced state).

After the $P_{2d}$ and $P_2$ switches are turned "off" and a non-overlapping interval elapses, the $P_1$ switch is turned "on" in Phase 1. At the beginning of the $P_1$ switch ON-interval, the current from the buffer 230 is charged to the capacitance $C_r$ formed by the reference electrode and the current is discharged from the capacitance $C_p$ formed by the primary electrode to ground. $P_{1d}$ switch ON-state is delayed until the transient state (imbalanced state) has reached a steady state (balanced state).

When the P1d switch is turned "on", imbalance (error) charges are supplied and/or withdrawn to and/or from the integrator 220. Such imbalance condition continues until the error reaches zero. When the balance state is reached, there will be no current (charge) flow when the P2d switch or the P1d switch is turned "on".

By delaying the turning-ON of the P1d switch and the P2d switch, respectively, until the stead states are reached, error or ripple injected into the integrator 220 can be avoided or minimized. Without such delay in turning-on of P1d switch and P2d switch, accuracy of measurement may be lost and the output voltage $V_{out}$ and ripple may be much larger.

The integrator 220 is advantageous in using a virtual ground to detect capacitance change in the capacitance pressure sensor. The charges supplied and/or withdrawn to and/or from the integrator 220 comes only from and/or to the common terminal $C_{com}$ that is a virtual ground terminal, and a stray capacitance shunting either the capacitance $C_r$ formed by the primary electrode or the capacitance $C_p$ formed by the reference electrode has no effect on the output of the integrator 220.

The common terminal $C_{com}$ as a virtual ground terminal of the integrator 220 operates exactly at ground potential. The resistor R is added between the + input of the integrator 220 and ground. By doing so, the resistor R may balance a bias current or leakage current, which is generated between two inputs, and prevent the + input of the integrator from being directly connected to ground.

With the changes in temperature of the capacitive pressure sensor, the characteristics of the output specification offset calibration element 300, the output specification non-linearity adjustment element 310 and the output specification gain adjustment element 320 are changed according to temperature coefficients, thereby affecting the output specifications of the output control circuit 200. Thus, the changes in the characteristics of the output specification offset calibration element 300, the output specification non-linearity adjustment element 310 and the output specification gain adjustment element 320 need to be compensated.

$$V_{\text{OUT.BGR}} = V_{\text{BE}} + V_{\text{T}} \ln n \qquad \dots (9)$$

$$\text{VT} = \frac{kT}{q} \qquad \dots (10)$$

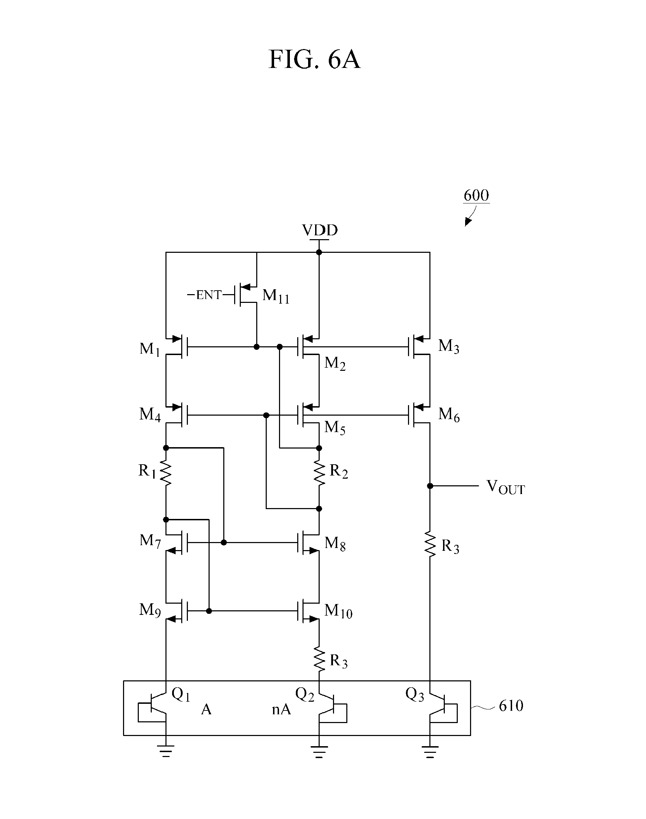

In Equation 9, $V_{\text{OUT.BGR}}$ represents an output voltage of the temperature compensation circuit 600. $V_{\text{BE}}$ represents a voltage between a base and an emitter of a transistor Q3 of a PNP transistor unit 610 in the temperature compensation circuit 600 of the output specification calibrating apparatus, which is illustrated in FIG. 6A. $V_{\text{T}}$ represents a thermal voltage defined by Equation 10. $n$ represents an area ratio between transistors Q1 and Q2 of the PNP transistor unit 610 of the temperature compensation circuit. In Equation 10, k is a Boltzmann constant. T is the absolute temperature. q is the quantity of charges.

According to Equation 10, VT changes by 0.085 mV/°C with temperature, and thereby, the output $V_{\text{OUT.BGR}}$ of the temperature compensation circuit 600 changes by $0.085 \times \ln(n)$ mV/°C with temperature. That is, through the constant change of the output $V_{\text{OUT.BGR}}$ of the temperature compensation circuit 600 according to changes in temperature, a thermal state can be detected.

A resistance of the ROI as the output specification temperature compensation element 330 in the form of a variable resistor as shown in FIG. 3A may be trimmed through the temperature compensation circuit 600 according to the detected temperature. By trimming the resistance, a gain of the amplifier that changes with temperature can be controlled, and thereby a constant output of the output control circuit 200 can be maintained even when the temperature varies.

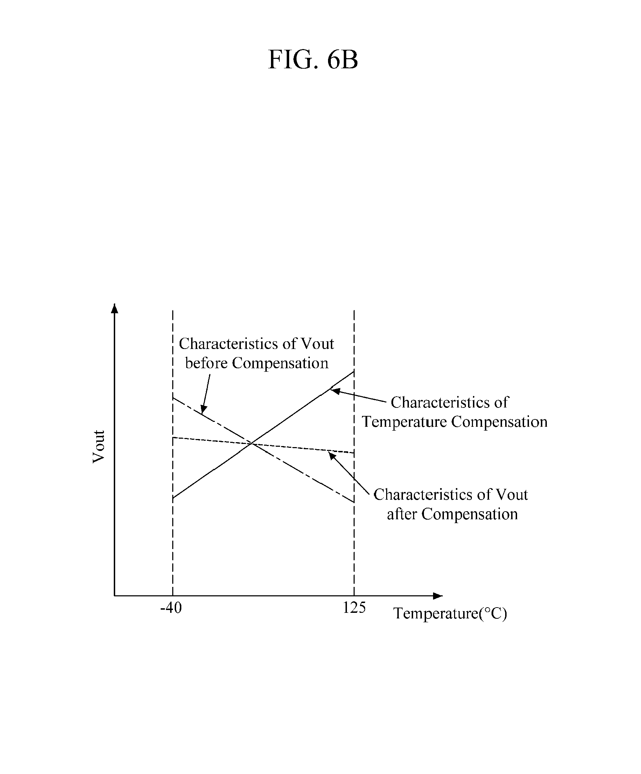

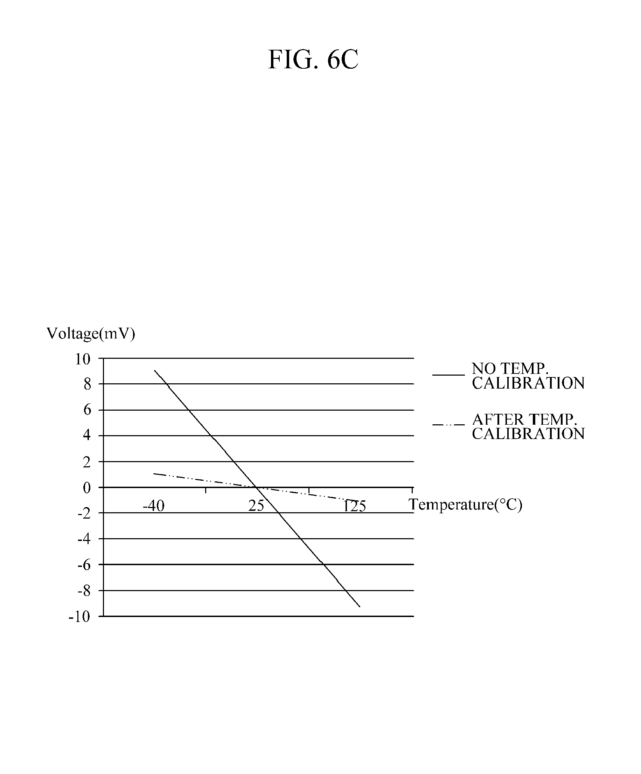

FIG. 6B is a graph showing an output voltage before and after voltage compensation by the output control circuit over temperature. FIG. 6C is a graph showing a result of simulation in which a resistance of the ROI as the output specification temperature compensation element 330 in the form of a variable resistor as shown in FIG. 3A is trimmed using the temperature compensation circuit 600 in an effort to compensate the changes in the output voltage due to the temperature change and thereby the output voltage is maintained to be constant.

According to the above described exemplary embodiments of the present invention, the output specification calibrating apparatus enables to adjust non-linearity, offset, and gain of the capacitive pressure sensor, and thus it is feasible to satisfy various needs of customers for the specifications of the output of the capacitive pressure sensor by easily calibrating the output of the capacitive pressure sensor in a software manner.

A number of examples have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

**Claims**

1. An output specification calibrating apparatus for a capacitive pressure sensor, comprising:

an output control circuit configured to convert capacitance changes of a capacitance $C_p$ formed by a primary electrode of the capacitive pressure sensor and a capacitance $C_r$ formed by a reference electrode of the capacitive pressure sensor into an output voltage and output the output voltage;
an output specification calibration element configured to comprise at least one output specification offset calibration element, an output specification non-linearity adjustment element, an output specification gain adjustment element, and an output specification temperature compensation element, each element configured to adjust a specification of an output of the output control circuit;
a setting unit configured to set electrical property values of the output specification offset calibration element, the output specification non-linearity adjustment element and the output specification gain adjustment element;
an external input interface configured to be connected to an external terminal for setting the electrical property values of the output specification offset calibration element, the output specification non-linearity adjustment element and the output specification gain adjustment element; and
a temperature compensation circuit configured to set electrical property values of the output specification temperature compensation element.

2. The output specification calibrating apparatus of claim 1, wherein the output control circuit is configured to comprise a switch unit configured to control charge and discharge operations of the capacitance $C_p$ formed by the primary electrode and the capacitance $C_r$ formed by the reference electrode,
an integrator configured to receive currents discharged from the capacitance $C_p$ and the capacitance $C_r$, output the received currents as an output voltage and continue to integrate an error correction signal until an error reaches zero,
a power input unit configured to supply a constant power to the capacitance $C_p$ and the capacitance $C_r$, and
a feedback unit configured to amplify an output voltage from the integrator and feed the amplified output voltage back to the capacitance $C_p$, the capacitance $C_r$ and the power input unit.

3. The output specification calibrating apparatus of claim 2, wherein the output specification offset calibration element is configured to comprise two variable resistors $R_{Lin1}$ and $R_{Lin2}$ being connected in series between a power input $V_+$ and ground, branching off from a series connection contact point, and being connected to an input terminal of the power input unit to calibrate an input voltage offset.

4. The output specification calibrating apparatus of claim 3, wherein the setting unit is configured to set resistances of the two variable resistors $R_{Lin1}$ and $R_{Lin2}$ as electrical property values.

5. The output specification calibrating apparatus of claim 2, wherein the output specification gain adjustment element is configured to comprise a variable resistor ROF being connected to both an inversion input terminal of an amplifier and an output terminal of the amplifier, which amplifies the output voltage from the integrator, to adjust a gain of the amplifier.

6. The output specification calibrating apparatus of claim 5, wherein the setting unit is configured to set a resistance of the variable resistor ROF as an electrical property value.

**7.** The output specification calibrating apparatus of claim 2, wherein the output specification temperature compensation element is configured to comprise a variable resistor ROI being connected to an inversion input terminal of an amplifier and an output terminal of the integrator, to compensate for changes in an output voltage of the amplifier due to temperature change.

**8.** The output specification calibrating apparatus of claim 7, wherein the temperature compensation circuit is configured to set a resistance of the variable resistor ROI as an electrical property value.

**9.** The output specification calibrating apparatus of claim 2, wherein the output specification non-linearity adjustment element is configured to comprise a variable resistor $R_{LinF}$ being connected to both an output terminal of the feedback unit and an input terminal of the power input unit, and connecting a pair of the capacitance $C_p$ formed by the primary electrode of the capacitive pressure sensor and the capacitance $C_r$ formed by the reference electrode between the output terminal of the feedback unit and the variable resistor $R_{LinF}$ to improve non-linearity of the capacitive pressure sensor.

**10.** The output specification calibrating apparatus of claim 9, wherein the setting unit is configured to set a resistance of the variable resistor $R_{Linf}$ as an electrical property value.

# FIG. 1

# FIG. 2

EP 2 755 005 A2

# FIG. 3B

# FIG. 3C

# FIG. 4

# FIG. 5A

# FIG. 5B

<BEFORE OFFSET CALIBRATION>

<AFTER OFFSET CALIBRATION>

# FIG. 6A

# FIG. 6B

Characteristics of Vout
before Compensation

Characteristics of
Temperature Compensation

Characteristics of Vout
after Compensation

Vout

-40

125

Temperature(°C)

# FIG. 6C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020010039983